# EUROPEAN PATENT SPECIFICATION

(11) **EP 3 643 490 B1**
(45) Date of publication and mention of the grant of the patent: **24.01.2024**
(21) Application number: 18820217.0
(22) Date of filing: 22.05.2018
(51) Int. Cl.: B29D 30/48, B60C 15/04

(54) **BEAD CORE PRODUCTION METHOD, BEAD CORE, AND PNEUMATIC TIRE**
VERFAHREN ZUR HERSTELLUNG EINES WULSTKERNS, WULSTKERN UND LUFTREIFEN
MÉTHODE DE PRODUCTION DE TRINGLE, TRINGLE ET PNEU

(30) Priority: 19.06.2017 JP 2017119970
(43) Date of publication of application: 29.04.2020
(73) Proprietor: Bridgestone Corporation, Tokyo 104-8340 (JP)
(72) Inventor: KON, Seiji, Tokyo 104-8340 (JP); KOUNO, Yoshihide, Tokyo 104-8340 (JP)
(74) Representative: Marks & Clerk LLP
(86) International application number: PCT/JP2018/019716
(87) International publication number: WO 2018/235506

(56) References cited:
- WO-A1-2011/122450
- WO-A1-2011/122450
- WO-A1-2013/089111
- WO-A1-2013/089111
- WO-A1-2016/084535
- JP-A- H 068 352
- JP-A- 2003 326 922
- JP-A- 2005 305 768
- JP-A- 2011 235 835

## Description

### TECHNICAL FIELD

The present disclosure relates to a production method for a bead core, a bead core, and a pneumatic tire having the bead core in a bead portion.

### BACKGROUND

A bead core comprised of a resin material-coated bead wire has been conventionally proposed for the purpose of reducing the weight of the member of the pneumatic tire or the like (for example, see PTL 1). Such a bead core can be produced by winding a member comprised of a bead wire coated with a resin material such as a thermoplastic material to form an annular member.

Here, since an optimum shape of the bead core varies depending on the use of the pneumatic tire, the tire size and the like, it is desired that the bead core has a shape suitable for the pneumatic tire in which the bead core is used.

### CITATION LIST

### Patent Literature

PTL 1: Japanese Patent Laid-Open No. 2011-207157. Attention is also drawn to the disclosure of WO2011/122450.

### SUMMARY

### (Technical Problem)

However, as in the technique disclosed in PTL 1, it takes a long time to produce bead cores of various shapes in a method of winding a resin-coated bead wire in an axial direction and a stage direction sequentially, resulting in poor productivity.

Then, the present disclosure has an object to provide a production method for a bead core, which can obtain a bead core comprised of a resin material-coated bead wire, the method having excellent productivity. In addition, the present disclosure has another object to provide a bead core comprised of a resin material-coated bead wire, the bead core having excellent productivity, and a lightweight pneumatic tire having the bead core in a bead portion.

### (Solution to Problem)

Summary structures of the present disclosure are as follows.

A production method for a bead core of the present disclosure comprises a forming step of forming a plurality of one or more types of annular bodies, each of which is formed by winding a strip member two or more turns, the strip member being comprised of one or more bead wires coated with a resin material, and
a joining step of joining the plurality of one or more types of annular bodies to one another in an axial direction of the annular body.

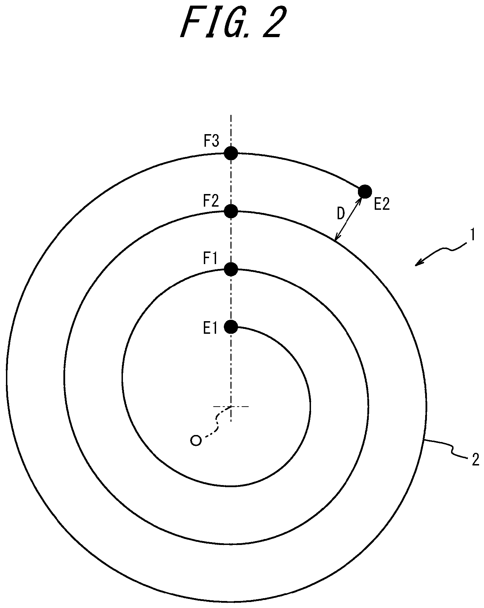

A phrase "formed by winding two or more turns" means that as illustrated in FIG. 2, when a center in a side view of the annular body is referred to as O and a winding start end (which is a thickness center of the bead wire in the side view of the annular body, and hereinafter the same is true of the circling positions such as points F1 and F2) is referred to as E1, positions on a straight line connecting between the point O and the point E1 (positions on a dashed line in FIG. 2) are regarded as the circling positions, a point (point F1 in the example of FIG. 2) which is at a first circling position following the point E1 is regarded as a first round, and when a point (point F2 in the example of FIG. 2) at the second circling position is regarded as a second round, the bead wire is wound at least to the second round (the point F2). The same applies even when an end portion on the outside in the radial direction of the annular body is the winding start end. In other words, this means that the annular body is formed by winding the bead wire to be stacked in two or more stages when viewed in any axial cross-sectional view of the annular body.

A bead core of the present disclosure is formed by joining one or more types of a plurality of annular bodies in an axial direction of the annular body, each of the annular bodies being formed by winding a strip member two or more turns, the strip member being comprised of one or more bead wires coated with a resin material.

A pneumatic tire of the present disclosure includes a pair of bead portions, and the above-described bead core in the bead portion.

### (Advantageous Effect)

According to the present disclosure, there can be provided a production method for a bead core, which can obtain a bead core comprised of a resin material-coated bead wire, the method having excellent productivity. In addition, according to the present disclosure, there can be provided a bead core comprised of a resin material-coated bead wire, the bead core having excellent productivity, and a lightweight pneumatic tire having the bead core in a bead portion.

### BRIEF DESCRIPTION OF THE DRAWINGS

In the accompanying drawings:
FIGS. 1A to 1I each are an axial cross-sectional view illustrating one example of an annular body used for a production method for a bead core according to one embodiment of the present disclosure;
FIG. 2 is a schematic side view of an annular body used for a production method for a bead core according to one embodiment of the present disclosure;
FIGS. 3A to 3F each are an axial cross-sectional view illustrating an example in which one type only of annular bodies is joined to each other in an axial direction of the annular body;
FIGS. 4A to 4F each are an axial cross-sectional view illustrating an example in which two or more types of annular bodies are joined to one another in an axial direction of the annular body;
FIG. 5 is a cross-sectional view in a tire width direction of a pneumatic tire according to one embodiment of the present disclosure;
FIG. 6 is a cross-sectional view illustrating a main portion of FIG. 5;
FIG. 7 is a cross-sectional view illustrating an example of a bead core and a bead filler; and
FIG. 8 is a cross sectional view illustrating another example of a bead core and a bead filler.

### DETAILED DESCRIPTION

Hereinafter, embodiments of the present disclosure will be demonstratively described in detail with reference to the drawings.

### <Production method for bead core>

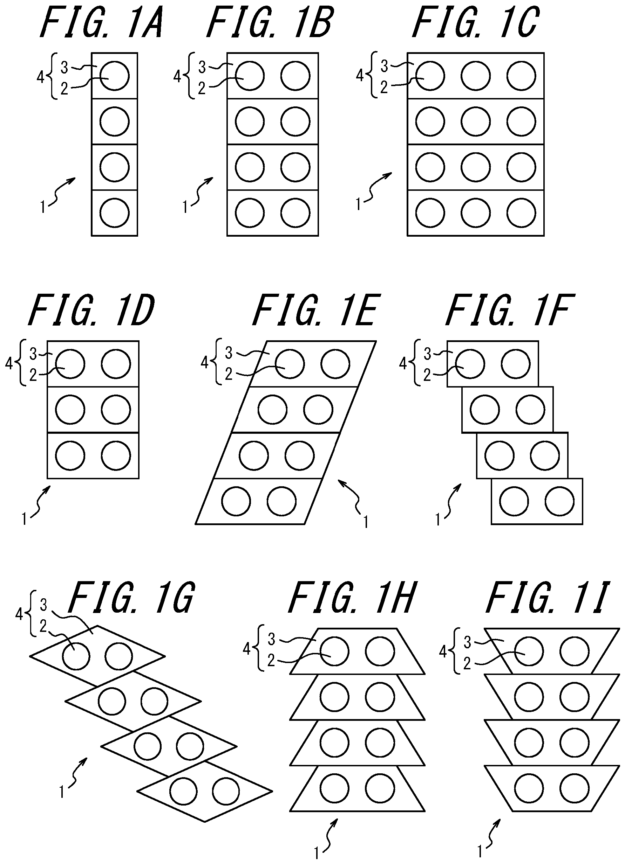

FIGS. 1A to 1I each are an axial cross-sectional view illustrating one example of an annular body used for a production method for a bead core according to one embodiment of the present disclosure. As illustrated in each of FIGS. 1A to 1I, an annular body 1 is formed by winding a strip member 4 two or more turns, the strip member 4 being comprised of one or more (for example, one in FIG. 1A, two in FIGS. 1B, and 1D to 1I, and three in FIG. 1C) bead wires 2 coated with a resin material 3. Thus, in the present embodiment, a plurality of one or more types of annular bodies 1 are formed (forming step), each of which is formed by winding the strip member 4 two or more turns, the strip member 4 being comprised of one or more bead wires 2 coated with the resin material 3.

The bead wire 2 may be made of any known material, and for example, a steel cord can be used as the material. The steel cord may be, for example, a monofilament wire made of steel or a stranded wire. In addition, the bead wire 2 may be made of organic fiber, carbon fiber, or the like.

For example, a thermoplastic elastomer or a thermoplastic resin may be used as the resin material 3. In addition, a resin in which cross-liking occurs under heat or electron beam or a resin curable by the heat transfer may be also used as the resin material 3. Examples of the thermoplastic elastomer include a polyolefin-based thermoplastic elastomer (TPO), a polystyrene-based thermoplastic elastomer (TPS), a polyamide-based thermoplastic elastomer (TPA), a polyurethane-based thermoplastic elastomer (TPU), a polyester-based thermoplastic elastomer (TPC), and a dynamic crosslinking type thermoplastic elastomer (TPV). Examples of the thermoplastic resin include a polyurethane resin, a polyolefin resin, a vinyl chloride resin, and a polyamide resin. Furthermore, such a thermoplastic resin having, for example, a deflection temperature under load (under a load of 0.45 MPa), as defined in ISO 75-2 or ASTM D648, of 78°C or more, and a tensile yield strength, as defined in JIS K7113, of 10 MPa or more, a tensile fracture elongation (JIS K7113), as defined in JIS K7113, of 50% or more, and a Vicat softening temperature (method A), as defined in JIS K7206, of 130°C or more may be employed. A tensile elastic modulus (as defined in JIS K7113: 1995) of the resin material 3 covering the bead wire 2 is preferably 50 MPa or more. The tensile elastic modulus of the resin material 3 covering the bead wire 2 is preferably 1000 MPa or less. Note that as used herein, the resin material 3 does not include a rubber (an organic polymer substance exhibiting the rubber elasticity at an ambient temperature).

In the present embodiment, the resin material 3 in a melted state coats an outer peripheral side of the bead wire 2, and is solidified by being cooled, to thereby form the strip member 4. A cross-sectional shape of the strip member 4 (a shape of a cross section perpendicular to an extending direction of the bead wire 2) can be formed in a desired shape using, for example, an extruder. In the present embodiment, the cross-sectional shape of the strip member 4 is preferably, but not particularly limited to, a polygon shape such as a quadrilateral shape (a square shape (FIG. 1A)), a rectangular shape (FIGS. 1B and 1F), a parallelogram shape (FIG. 1E), a trapezoidal shape (FIGS. 1H and 1I), a deformed shape (FIG. 1G and the like), a hexagonal shape, and an octagonal shape. This is because the annular bodies 1 can be joined to one another more easily (for example, without a gap), thereby further improving the shape moldability. Alternatively, the cross-sectional shape of the strip member 4 may be a circular shape or an oval shape. The cross-sectional shape of the strip member 4 may be also a chamfered shape. In addition, it is preferable that an adhesive such as a silane coupling agent is applied with a very small thickness to the bead wire 2 in advance, to enhance the adhesiveness between the bead wire 2 and the resin material 3.

FIG. 2 is a schematic side view of an annular body used for a production method for a bead core according to one embodiment of the present disclosure. FIG. 2 illustrates only the bead wire 2 for simplification, and does not illustrate the resin material 3. As illustrated in FIG. 2, the bead wire 2 is wound in a spiral form from a winding start end E1 in this cross-sectional view. As described above, points F1, F2 and F3 are circling positions, and in this example, a winding finish end E2 extends at least from the point F3. Accordingly, in this example, the bead wire 2 is wound to be stacked in three or more stages when viewed from any radial direction position. A length (an overlapping length) of the bead wire from the circling position (in this example, the point F3) positioned closest to the winding finish end E2 side to the winding finish end (in this example, the point E2) may be, but not particularly limited to, 1/200 to 199/200 of a circling distance, for example, from the point F2 to the point F3. This is because when the overlapping length is set to 1/200 or more of the circling distance, an area where the coated resin portions between the bead wire 2 stages disposed adjacent to each other in the radial direction (the stage direction) are in contact with each other is increased, whereby for example, the adhesiveness and the welding force can be enhanced and a tensile burden can be reduced, and when the overlapping length is set to 199/200 or less of the circling distance, the weight of the bead core can be reduced. For the same reason, the overlapping length is preferably set to 1/100 to 2/3 of the circling distance from the point F2 to the point F3, and is more preferably 1/50 to 1/3 of the circling distance from the point F2 to the point F3.

Returning to FIG. 1, each of examples illustrated in FIGS. 1A to 1I will be described. In the example illustrated in FIG. 1A, an annular body 1 is formed by winding a strip member 4 to be stacked in four stages in this cross-sectional view, the strip member 4 being comprised of one bead wire 2 coated with a resin material 3. The strip member 4 is formed in a square shape in this cross-sectional view. A method of forming the annular body 1 includes, but not particularly limited to, a method of melting the resin material 3 of the strip member 4 by hot air or the like, winding the strip member 4 and solidifying the resin material 3 again, whereby the resin material 3 portions covering the respective bead wire 2 stages disposed adjacent to each other can be welded to each other. Alternatively, the resin material 3 portions covering the respective bead wire 2 stages disposed adjacent to each other may be bonded to each other by an adhesive. Thus, a simple method in which the resin material 3 portions disposed in the stages adjacent to each other are welded or bonded to each other can be used to form an annular body having an excellent shape retaining property and produce a bead core having a high durability. The same is true of the examples illustrated in FIGS. 1B to 1I.

In the example illustrated in FIG. 1B, an annular body 1 is formed by winding a strip member 4 to be stacked in four stages in this cross-sectional view, the strip member 4 being comprised of two bead wires 2 coated with a resin material 3. The strip member 4 is formed in a rectangular shape in this cross-sectional view. In the example illustrated in FIG. 1C, an annular body 1 is formed by winding a strip member 4 to be stacked in four stages in this cross-sectional view, the strip member 4 being comprised of three bead wires 2 coated with a resin material 3. The strip member 4 is formed in a rectangular shape in this cross-sectional view. Thus, the number of bead wires 2 covered with the resin material 3 may be, but not particularly limited to, any number equal to or more than one, but is preferably two or three to more surely provide a production method having excellent productivity and shape moldability.

In the example illustrated in FIG. 1D, an annular body 1 is formed by winding a strip member 4 to be stacked in three stages in this cross-sectional view, the strip member 4 being comprised of three bead wires 2 coated with a resin material 3. The strip member 4 is formed in a rectangular shape in this cross-sectional view. Thus, if the strip member 4 is wound two or more turns, the number of stages to be stacked is arbitrary.

In the example illustrated in FIG. 1E, an annular body 1 is formed by winding a strip member 4 to be stacked in four stages in this cross-sectional view, the strip member 4 being comprised of two bead wires 2 coated with a resin material 3. The strip member 4 is formed in a parallelogram shape in this cross-sectional view.

In the example illustrated in FIG. 1F, an annular body 1 is formed by winding the strip member 4 to be stacked in four stages in this cross-sectional view, the strip member 4 being comprised of two bead wires 2 coated with a resin material 3. The strip member 4 is formed in a rectangular shape in this cross-sectional view. In this example, the strip member 4 is stacked so that each stage position of the strip member 4 is shifted in the axial direction. In the example illustrated in FIG. 1G, an annular body 1 is formed by winding the strip member 4 to be stacked in four stages in this cross-sectional view, the strip member 4 being comprised of two bead wires 2 coated with a resin material 3. The strip member 4 is formed in a rhombic shape in this cross-sectional view. In this example, the strip member 4 is stacked so that each stage position of the strip member 4 is shifted in the axial direction. In cases illustrated in FIGS. 1F and 1G, to enhance the joinability (the adhesiveness and the weldability) between the resin materials 3 disposed in the stages disposed adjacent to each other, it is preferable that each stage of the strip member 4 is shifted in the axial direction to such an extent that the contact area between a radially outer surface of one stage and a radially inner surface of a stage disposed radially outward by one from the one stage is equal to or larger than half of each of the radially outer surface area and the radially inner surface area.

In the example illustrated in FIG. 1H, an annular body 1 is formed by winding a strip member 4 to be stacked in four stages in this cross-sectional view, the strip member 4 being comprised of two bead wires 2 coated with a resin material 3. The strip member 4 is formed in a trapezoidal shape in this cross-sectional view. In the example illustrated in FIG. 1I, an annular body 1 is formed by winding a strip member 4 to be stacked in four stages in this cross-sectional view, the strip member 4 being comprised of two bead wires 2 coated with a resin material 3. The strip member 4 is formed in a trapezoidal shape in this cross-sectional view (an inversed trapezoidal shape when an end in the same direction as in FIG. 1H serves as the winding start end).

As illustrated in FIGS. 1A to 1I, the strip members 4 can have various shapes in an axial cross-sectional view of the annular body 1, but it is preferable that the strip member 4 has a polygon shape in the axial cross-sectional view as illustrated in FIGS. 1A to 1I to increase the contact area between the annular body 1 and the same type or the other type of annular body 1 to be joined to each other in the axial direction.

In the present embodiment, as illustrated in FIGS. 1A to 1I for example, one or more types of annular bodies 1 are formed, each of which is formed by winding the strip member 4 two or more turns, the strip member 4 being comprised of one or more bead wires 2 coated with the resin material 3. Then, a plurality of one or more types of annular bodies 1 thus formed are joined to one another in the axial direction of the annular body 1 (joining step).

Any known method can be used as a method of joining the plurality of one or more types of annular bodies 1 in the axial direction of the annular body 1. The joining step preferably includes, although not particularly limited, welding or bonding an interface between the annular bodies 1 to be joined to each other in the axial direction of the annular body 1. This is because a simple method can be used to produce a bead core having a high durability.

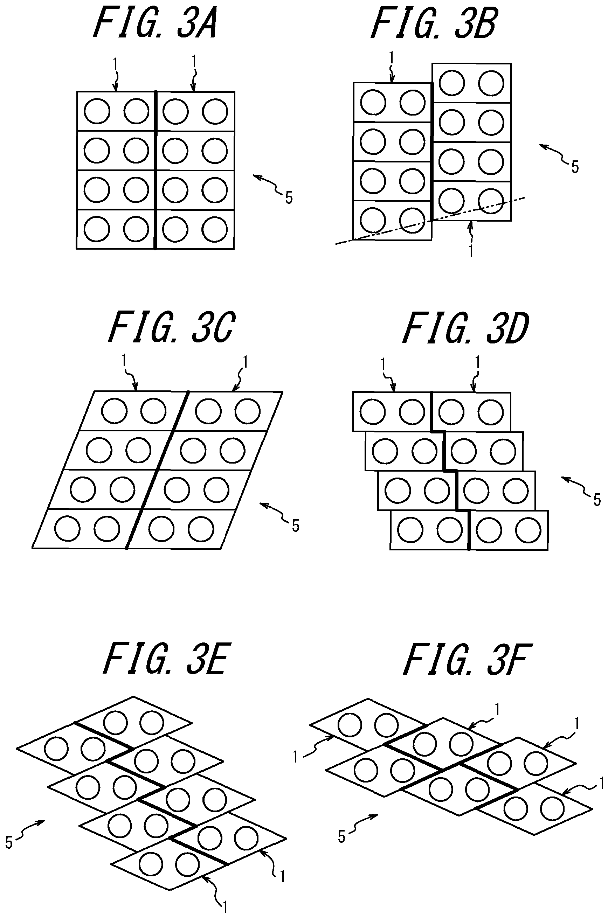

FIGS. 3A to 3F each are an axial cross-sectional view illustrating an example in which one type only of annular bodies is joined to each other in the axial direction of the annular body.

FIG. 3A illustrates an example in which two annular bodies 1 illustrated in FIG. 1B are joined to each other in the axial direction of the annular body 1 to thereby form a bead core 5. In this example, the bead core 5 is formed in a rectangular shape in a cross-sectional view. Note that in the example illustrated in FIG. 3A, an interface (indicated by a thick line in FIG. 3A) between the two annular bodies 1 is welded or bonded. Hereinafter, in FIGS. 3B to 3G, the thick line indicates that the interface is welded or bonded.

FIG. 3B illustrates an example in which two annular bodies 1 illustrated in FIG. 1B are joined to each other in the axial direction of the annular body 1 to be shifted from each other by half the height of one stage in a radial direction, to thereby form a bead core 5. For example, when a bottom edge extending from an inner side (left on the sheet of FIG. 3) toward an outer side in a tire width direction has a shape (indicated by a two-dot chain line) inclined from an inner side to an outer side in a radial direction, the bead core 5 having a shape illustrated in FIG. 3B can be used. Note that in the example illustrated in FIG. 3B, a direction shifted by half the height of one stage in the radial direction can be also reversed. Therefore, for example, when the bottom edge extending from the inner side toward the outer side in the tire width direction has a shape inclined from the outer side to the inner side in the radial direction, the bead core 5 can be used. For example, an inclination angle formed with respect to the axial direction of the above-described bottom edge can be increased by increasing an amount of shifting the two annular bodies 1 from each other in the radial direction, the two annular bodies 1 being adjacent to each other in the axial direction of the annular body 1. In addition, the inclination angle formed with respect to the axial direction of the above-described bottom edge can be reduced by reducing the amount of shifting the two annular bodies 1 from each other in the radial direction, the two annular bodies 1 being adjacent to each other in the axial direction of the annular body 1. Note that to secure the area of the interface between the two annular bodies 1 to be joined to each other in the axial direction, it is preferable that the amount of shifting in the radial direction is a height equal to or lower than the height of one stage of the strip member.

FIG. 3C illustrates an example in which two annular bodies 1 illustrated in FIG. 1E are joined to each other in the axial direction of the annular body 1 to thereby form a bead core 5. In this example, the bead core 5 is formed in a parallelogram shape in a cross-sectional view, and becomes further closer to a complete parallelogram shape in a cross-sectional view than as illustrated in FIG. 3B.

FIG. 3D illustrates an example in which two annular bodies 1 illustrated in FIG. 1F are joined to each other in the axial direction of the annular body 1 to thereby form a bead core 5. In this example, the interface between the two annular bodies 1 to be joined to each other in the axial direction of the annular body 1 is formed in a zigzag-shape in a cross-sectional view, and the contact area between the two annular bodies 1 to be joined to each other is increased, which can provide the excellent shape stability for the bead core 5.

FIG. 3E illustrates an example in which two annular bodies 1 illustrated in FIG. 1G are joined to each other in the axial direction of the annular body 1 to thereby form a bead core 5. Also in this example, the contact area between the two annular bodies 1 is increased, which can provide the excellent shape stability for the bead core 5.

FIG. 3F illustrates an example in which three annular bodies 1 are joined to one another in the axial direction of the annular body 1, each of the annular bodies 1 being comprised of the annular body 1 illustrated FIG. 1G modified to be stacked in two stages, to thereby form a bead core 5. Also in this example, the contact area between the two annular bodies 1 is increased, which can provide the excellent shape stability for the bead core 5. Thus, the number of annular bodies 1 to be joined to one another in the axial direction of the annular body 1 may be three or more.

As illustrated in FIGS. 3A to 3F, the bead cores 5 having various shapes can be formed from one type only of annular bodies 1.

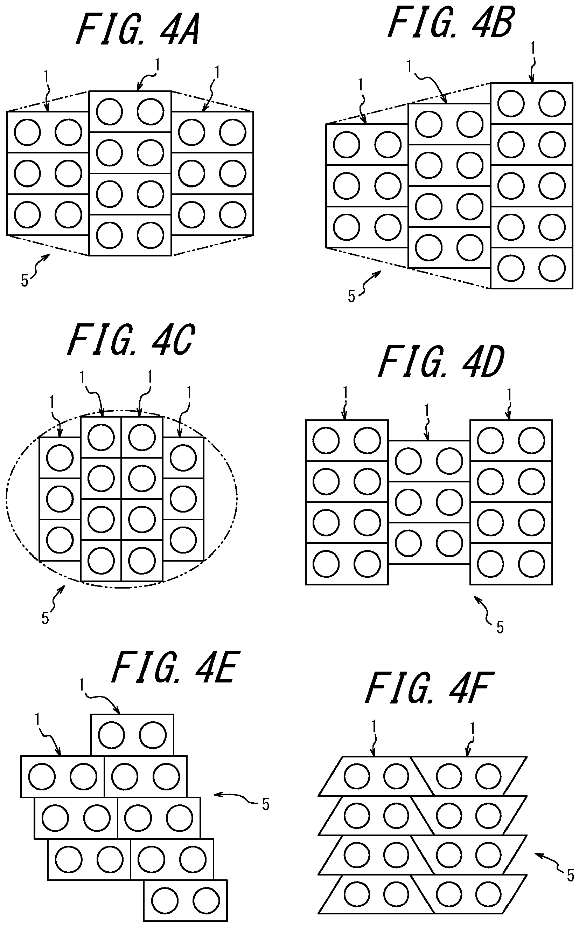

FIGS. 4A to 4F each are an axial cross-sectional view illustrating an example in which two or more types of annular bodies are joined to one another in an axial direction of the annular body 1.

FIG. 4A illustrates an example in which two types of annular bodies 1 are joined to one another in the axial direction of the annular body 1 using two annular bodies 1 illustrated in FIG. 1D and one annular body 1 illustrated in FIG. 1B, to thereby form a bead core 5. In this example, the annular bodies 1 illustrated in FIG. 1D are joined to both sides in the axial direction of the annular body 1 illustrated in FIG. 1B, respectively, to thereby form a bead core 5. Note that, for example, two annular bodies are prepared, each of the annular bodies being comprised of the annular body 1 illustrated in FIG. 1D modified to be stacked in two stages, and the bead core 5 can be formed to have a shape in which the prepared two annular bodies are joined to both sides in the axial direction of the bead core 5 illustrated in FIG. 1A, respectively. Although not illustrated, it is preferable that the interface between the annular bodies 1 disposed adjacent to each other in the axial direction of the annular body 1 is welded or bonded, similarly to FIGS. 3A to 3G.

FIG. 4B illustrates an example in which three types of annular bodies 1 are joined to one another in the axial direction of the annular body 1 using one annular body 1 illustrated in FIG. 1D, one annular body 1 illustrated in FIG. 1B, and one annular body 1 not illustrated in FIG. 1 (an annular body illustrated in FIG. 1B modified to be stacked in five stages), to thereby form a bead core 5. In this example, the annular body 1 formed in three stages (FIG. 1D) and the annular body 1 formed in five stages are joined to both sides in the axial direction of the annular body 1 formed in four stages (FIG. 1B), respectively, so that each of the annular body 1 formed in three stages (FIG. 1D) and the annular body 1 formed in five stages is shifted with respect to the annular body 1 formed in four stages by half the height of one stage in a radial direction. For example, when a bottom edge extending from an inner side (left on the sheet of FIG. 4B) toward an outer side in a tire width direction has a shape inclined from an outer side to an inner side in a radial direction, and a top edge extending from an inner side toward an outer side in the tire width direction has a shape inclined the inner side to the outer side in the radial direction, this bead core 5 can be used.

FIG. 4C illustrates an example in which two types of annular bodies 1 are joined to one another in the axial direction of the annular body 1 using two annular bodies 1 illustrated in FIG. 1A and two annular bodies 1 formed in three stages not illustrated in FIG. 1 (annular bodies 1 illustrated in FIG. 1A modified to be stacked in three stages), to thereby form a bead core 5. In this example, the two annular bodies 1 illustrated in FIG. 1A are joined to each other at a center, and the two annular bodies 1 formed in three stages are in contact with both sides of the two annular bodies 1 joined to each other at the center, respectively, so that each of the two annular bodies 1 formed in three stages is shifted with respected to the two annular bodies 1 joined to each other at the center by half the height of one stage in a radial direction. Note that a bead core 5 having a shape further closer to a circular cross-sectional shape (or a number of angles of the polygonal shape) can be formed by increasing the number of annular bodies 1 to be joined to one another in the axial direction of the annular body 1 while gradually shifting the height in the radial direction.

FIG. 4D illustrates an example in which two types of annular bodies 1 are joined to one another in the axial direction of the annular body 1 using two annular bodies 1 illustrated in FIG. 1B and one annular body 1 illustrated in FIG. 1D, to thereby form a bead core 5. In this example, the two annular bodies 1 illustrated in FIG. 1B are joined to both sides in the axial direction of the annular body 1 illustrated in FIG. 1D, respectively, so that each of the two annular bodies 1 illustrated in FIG. 1B is shifted with respected to the annular bodies 1 illustrated in FIG. 1D by half the height of one stage in a radial direction. In this example, the bead core 5 has an L-shaped cross section.

FIG. 4E illustrates an example in which two types of annular bodies 1 are joined to one another in the axial direction of the annular body 1 using the annular body 1 illustrated in FIG. 1F formed in three stages and the annular body 1 illustrated in FIG. 1F formed in five stages, although not illustrated in FIG. 1, to thereby form a bead core 5. In this example, a radial position of the three stages in the center of the annular body 1 formed in five stages is aligned with a radial position of the annular body 1 formed in three stages in the axial direction. Also in this example, the contact area between the two annular bodies 1 to be joined to each other is increased, which can provide the excellent shape stability for the bead core 5.

FIG. 4F illustrates an example in which the annular body 1 illustrated in FIG. 1H and the annular body 1 illustrated in FIG. 1I are joined to each other in the axial direction of the annular body 1, to thereby form a bead core 5. Also in this example, the contact area between the two annular bodies 1 to be joined to each other is increased, which can provide the excellent shape stability for the bead core 5.

As in the examples illustrated in FIGS. 4A to 4F, in the present embodiment, two or more types of annular bodies 1 are combined, whereby the bead cores 5 having various shapes can be formed.

In one embodiment of the present disclosure, the above-described forming step is performed prior to the above-described joining step. As described above, according to one embodiment of the present disclosure, one type or two or more types of annular bodies 1 formed are joined in combination in the axial direction of the annular body 1, whereby the bead cores 5 can be produced with high productivity. As illustrated, the bead cores 5 having various shapes can be produced by combining one type or two or more types of annular bodies 1 formed, and has excellent shape moldability. Thus, according to one embodiment of the present disclosure, there can be provided a production method for a bead core comprised of a resin material-coated bead wire, the method having excellent productivity and shape moldability. In the present embodiment, one type or two or more types of annular bodies 1 are formed as semifinished products, whereby it is particularly advantageous in that the bead cores 5 having various shapes can be produced by combination patterns, and the productivity and shape moldability can be improved.

In the present embodiment, the bead core 5 has winding start ends and winding finish ends of the strip members 4 whose number corresponds to the number of annular bodies 1 to be joined to one another in the axial direction of the annular body 1. Then, in the present embodiment, when the annular bodies 1 are joined to one another in the axial direction of the annular body 1, it is preferable that the winding start ends and the winding finish ends of the two annular bodies 1 disposed adjacent to each other in the axial direction of the annular body 1 are shifted from each other by 160° to 200° in a circumferential direction of the annular body 1. This is because the uniformity in the circumferential direction of the bead core 5 can be improved, and the durability of the bead core 5 can be enhanced while avoiding concentration of stresses generated at the winding start end and the winding finish end.

Another embodiment of the present disclosure will be described. In this embodiment, the above-described forming step and the above-described joining step are performed simultaneously.

The bead core 5 (for example, the bead cores 5 illustrated in FIGS. 3A to 3F and FIGS. 4A to 4F) described in the above-described embodiment can be formed by joining a plurality of one or more types of annular bodies 1 to one another in the axial direction of the annular body 1 while forming the plurality of one or more types of annular bodies 1 simultaneously, each of which is formed by winding the strip member 4 comprised of one or more bead wires 2 coated with the resin material 3. That is, a plurality of one or more types of annular bodies 1 can be joined to one another in the axial direction of the annular body 1 while forming the plurality of one or more types of annular bodies 1 simultaneously. In other words, the above-described forming step and the above-described joining step can be performed simultaneously. Also in this other embodiment, since the bead wire 2 in one annular body 1 is wound only in the radial direction, the productivity can be enhanced as compared with a method of winding one bead wire 2 in a radial direction and an axial direction sequentially. In addition, the bead cores 5 having various shapes can be produced based on the selection of the type and number of annular bodies 1 formed simultaneously and the position adjustment in a stage direction. Accordingly, also in this other embodiment, there can be provided a production method for a bead core comprised of a resin material-coated bead wire, the method having excellent productivity and shape moldability. In the above-described other embodiment, it is particularly advantageous in that the bead cores having desired shapes can be produced with high productivity and shape moldability every time according to, for example, specific shapes of the desired bead cores.

Here, also in the above-described other embodiment, for the same reason as the above-described embodiment, it is preferable that in the joining step, the interface for joining a plurality of one or more types of annular bodies 1 in the axial direction of the annular body 1 is welded or bonded. In addition, it is preferable that the annular body 1 is formed in which the strip member 4 is wound to be stacked by welding or bonding. In particular, in the above-described other embodiment, it is preferable that the interfaces between the plurality of one or more types of annular bodies 1 to be joined to one another in the axial direction of the annular body 1 are welded, and in the annular body 1, the strip member 4 is wound to be stacked by welding. This is because when the resin material is melted by hot air or the like, wound to be stacked and solidified and welded to thereby form one annular body 1, in the above-described other embodiment, at the same time, the resin material portions in the interface to be joined to each other in the axial direction of the annular body 1 can be melted by hot air or the like, and the interface can be solidified and welded, whereby the bead core can be produced with high productivity.

Also in the above-described other embodiment, for the same reason as the above-described embodiment, it is preferable that the strip member 4 is comprised of two or three bead wires 2 coated with the resin material 3, and the strip member 4 has a polygon shape in the axial cross-sectional view of the annular body 1.

Also in the above-described other embodiment, similarly to the above-described embodiment, when the annular bodies 1 are joined to one another in the axial direction of the annular body 1, it is preferable that the winding start ends and the winding finish ends of the two annular bodies 1 disposed adjacent to each other in the axial direction of the annular body 1 are shifted from each other by 160° to 200° in a circumferential direction of the annular body 1. This is because the uniformity in the circumferential direction of the bead core 5 can be improved, and the durability of the bead core 5 can be enhanced while avoiding concentration of stresses generated at the winding start end and the winding finish end. On the other hand, in the other embodiment, since the forming step and the joining step are performed simultaneously, it is preferable that the winding start ends and the winding finish ends of the two annular bodies 1 disposed adjacent to each other in the axial direction of the annular body 1 are aligned with each other in the circumferential direction of the annular body 1 from the viewpoint of operability. In addition, from the viewpoint of enhancing the joinability between the two annular bodies 1 disposed adjacent to each other in the axial direction of the annular body 1 to secure the durability of the bead core 5, the winding finish end of one annular body 1 may be joined to the other one annular body 1 disposed adjacent to any one side in the axial direction of the annular body 1. At this time, it is preferable that the winding finish end is joined to a position having a thickness in the radial direction, that is thinner than the other circumferential positions on the other one annular body 1.

### <Bead core>

As illustrated in FIGS. 3A to 3F and FIGS. 4A to 4F, the bead core 5 according to one embodiment of the present disclosure is formed by joining a plurality of one or more types of annular bodies 1 in the axial direction of the annular body 1, each of the annular bodies 1 being formed by winding the strip member 4 two or more turns, the strip member 4 being comprised of one or more bead wires 2 coated with the resin material 3. The bead core 5 in the present embodiment is formed in a desired shape. In addition, in the bead core of the present disclosure, it is preferable that the interfaces between the plurality of one or more types of annular bodies 1 to be joined to one another in the axial direction of the annular body 1 are welded or bonded. This is because the durability of the bead core 5 can be enhanced. In the bead core of the present disclosure, it is preferable that in the annular body 1, the strip member 4 is wound to be stacked by welding or bonding. This is because the shape retaining property of the annular body 1 can be improved to enhance the durability of the bead core 5. In the bead core of the present disclosure, it is preferable that the strip member 4 is comprised of two or three bead wires 2 coated with the resin material 3. This is because more desired shape can be obtained. In the bead core of the present disclosure, it is preferable that the strip member 4 has a polygon shape in the axial cross-sectional view of the annular body 1. This is because the annular bodies 1 are joined to one another so that a contact area between the annular bodies 1 in the axial direction is increased, whereby the durability of the bead core 5 can be enhanced.

### <Pneumatic tire>

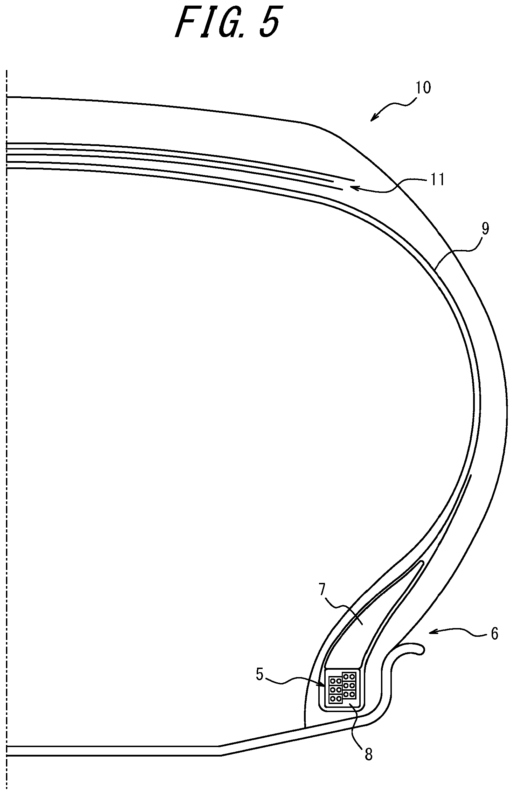

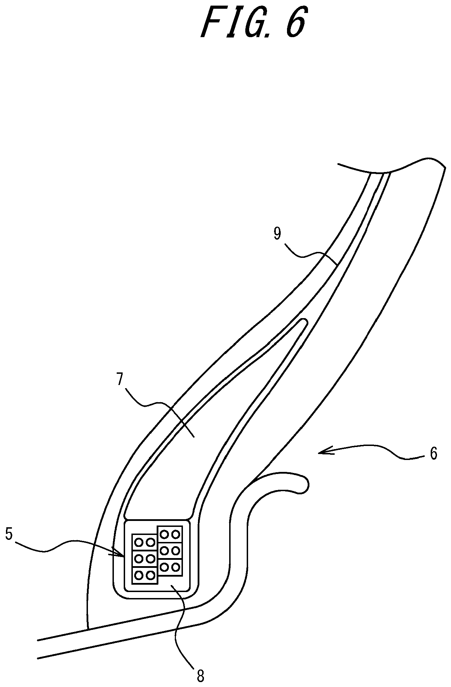

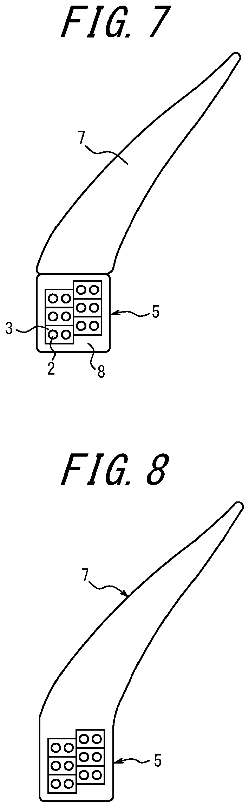

FIG. 5 is a cross-sectional view in a tire width direction of a pneumatic tire according to one embodiment of the present disclosure. FIG. 6 is a cross-sectional view illustrating a main portion of FIG. 5. FIG. 7 is a cross-sectional view illustrating an example of a bead core and a bead filler. A pneumatic tire 10 according to one embodiment of the present disclosure includes a pair of bead portions 6, and has the bead core 5 (herein, the bead core 5 having a shape illustrated in FIG. 3B is illustrated as an example) in the bead portion 6. A structure of the pneumatic tire can include, although not particularly limited, for example, the pair of bead portions 6, a pair of sidewall portions connected to the bead portions, and a tread portion connected to the pair of sidewall portions. The other portions of the pneumatic tire can be produced, although not particularly limited, by using a rubber. The pneumatic tire can be produced through a vulcanization step using the bead core 5 in the above-described embodiment and unvulcanized rubber. In the example illustrated in FIG. 5, a bead filler 7 is disposed on the outside in the tire radial direction of the bead core 5. In this example, the bead filler 7 has a triangular cross-sectional shape and is made of rubber. In this example, the annular bodies of the bead core 5 are coated with a coating resin 8 of the bead core. In this example, the pneumatic tire 10 includes a belt 11 disposed on the outside in the tire radial direction of a carcass 9 toroidally extending over the pair of bead portions 6. FIG. 8 is a cross-sectional view illustrating another example of a bead core and a bead filler. As illustrated in FIG. 8, the bead filler 7 can be made of resin. In this case, coating resin coating the annular bodies of the bead core 5 and the bead filler 7 can be integrally formed.

Alternatively, the pneumatic tire having a tire structure using resin for the skeleton of the tire can be provided, and using a mold having a cavity having a shape corresponding to a tire skeleton shape, the above-described bead core 5 is fixed to a portion corresponding to the bead portion of the mold by, for example, a jig, the resin is poured into the cavity in the mold, and the injection molding is performed. Then, the unvulcanized rubber is attached to a position using a rubber member including a tread portion, and the pneumatic tire can be produced through the vulcanization step.

As described above, the embodiments of the present disclosure have been described, but the present disclosure is not limited to the above-described embodiments. In particular, the number of bead wires 2 used for one stage of the annular body 1, the number of stages of the annular body 1, the cross-sectional shape of the strip member 4 may vary. In addition, when the annular bodies are joined to one another in the axial direction of the annular body 1, the combination of type and number of annular bodies 1 may vary. In this case, the position shifting amount in the stage direction (or no position shift) may vary.

### REFERENCE SIGNS LIST

- 1: Annular body
- 2: Bead wire
- 3: Resin material
- 4: Strip member
- 5: Bead core
- 6: Bead portion
- 7: Bead filler
- 8: Coating resin of bead core
- 9: Carcass
- 10: Pneumatic tire
- 11: Belt

## Claims

1. A production method for a bead core (5), comprising:
a forming step of forming a plurality of one or more types of annular bodies (1), each of which is formed by winding a strip member (4) two or more turns, the strip member being comprised of one or more bead wires (2) coated with a resin material (3); and **characterised by**
a joining step of joining the plurality of one or more types of annular bodies to one another in an axial direction of the annular body.

2. The production method for a bead core according to claim 1, wherein
the forming step is performed prior to the joining step.

3. The production method for a bead core according to claim 1, wherein
the forming step and the joining step are performed simultaneously.

4. The production method for a bead core according to any one of claims 1 to 3, wherein
in the joining step,
an interface between the plurality of one or more types of annular bodies to be joined to each other in the axial direction of the annular body is welded or bonded.

5. The production method for a bead core according to any one of claims 1 to 4, wherein
the annular body is formed in which the strip member is wound to be stacked by welding or bonding.

6. The production method for a bead core according to any one of claims 1 to 5, wherein
the strip member is comprised of the two or three bead wires coated with the resin material.

7. The production method for a bead core according to any one of claims 1 to 6, wherein
the strip member has a polygon shape in an axial cross-sectional view of the annular body.

8. A bead core (5), comprising
one or more types of a plurality of annular bodies,
each of the annular bodies being formed by winding a strip member (4) two or more turns, the strip member being comprised of one or more bead wires (2) coated with a resin material (3); **characterised in that**
said plurality of annular bodies are joined to each other in an axial direction of the annular body.

9. The bead core according to claim 8, wherein
the interface between the one or more types of the plurality of annular bodies is welded or bonded so that the one or more types of the plurality of annular bodies are joined to each other in the axial direction of the annular body.

10. A pneumatic tire, comprising:
a pair of bead portions (6); and
the bead core (5) according to claim 8 or 9 in the bead portion.

## Patentansprüche

1. Herstellungsverfahren für einen Wulstkern (5), das Folgendes umfasst:
einen Formungsschritt des Formens einer Vielzahl von einer oder mehreren Arten von ringförmigen Körpern (1), deren jeder durch Wickeln eines Streifenelements (4) um zwei oder mehr Windungen geformt wird, wobei das Streifenelement aus einem oder mehreren Wulstdrähten (2) besteht, die mit einem Harzmaterial (3) überzogen sind; und **gekennzeichnet durch**
einen Verbindungsschritt des Verbindens der Vielzahl von einer oder mehreren Arten von ringförmigen Körpern miteinander in einer Axialrichtung des ringförmigen Körpers.

2. Herstellungsverfahren für einen Wulstkern nach Anspruch 1, wobei der Formungsschritt vor dem Verbindungsschritt durchgeführt wird.

3. Herstellungsverfahren für einen Wulstkern nach Anspruch 1, wobei der Formungsschritt und der Verbindungsschritt gleichzeitig durchgeführt werden.

4. Herstellungsverfahren für einen Wulstkern nach einem der Ansprüche 1 bis 3, wobei
in dem Verbindungsschritt
eine Grenzfläche zwischen der Vielzahl von einer oder mehreren Arten von ringförmigen Körpern, die miteinander in der Axialrichtung des ringförmigen Körpers zu verbinden sind, geschweißt oder geklebt wird.

5. Herstellungsverfahren für einen Wulstkern nach einem der Ansprüche 1 bis 4, wobei
der ringförmige Körper geformt wird, in dem das Streifenelement gewickelt wird, um durch Schweißen oder Kleben gestapelt zu werden.

6. Herstellungsverfahren für einen Wulstkern nach einem der Ansprüche 1 bis 5, wobei
das Streifenelement aus den zwei oder drei Wulstdrähten besteht, die mit dem Harzmaterial überzogen sind.

7. Herstellungsverfahren für einen Wulstkern nach einem der Ansprüche 1 bis 6, wobei
das Streifenelement in einer axialen Querschnittsansicht des ringförmigen Körpers eine vieleckige Form aufweist.

8. Wulstkern (5), der Folgendes umfasst:
eine oder mehrere Arten einer Vielzahl von ringförmigen Körpern, wobei jeder der ringförmigen Körper durch Wickeln eines Streifenelements (4) um zwei oder mehr Windungen geformt ist, wobei das Streifenelement aus einem oder mehreren Wulstdrähten (2) besteht, die mit einem Harzmaterial (3) überzogen sind; **dadurch gekennzeichnet, dass**
die Vielzahl von ringförmigen Körpern miteinander in einer Axialrichtung des ringförmigen Körpers verbunden sind.

9. Wulstkern nach Anspruch 8, wobei
die Grenzfläche zwischen der einen oder den mehreren Arten der Vielzahl von ringförmigen Körpern geschweißt oder geklebt ist, sodass die eine oder die mehreren Arten der Vielzahl von ringförmigen Körpern miteinander in der Axialrichtung des ringförmigen Körpers verbunden sind.

10. Luftreifen, der Folgendes umfasst:
ein Paar von Wulstabschnitten (6); und
den Wulstkern (5) nach Anspruch 8 oder 9 in dem Wulstabschnitt.

## Revendications

1. Procédé de production d'une tringle (5), comprenant :
une étape de formage consistant à former une pluralité d'un ou de plusieurs types de corps annulaires (1), dont chacun est formé en enroulant un élément de bande (4) de deux tours ou plus, l'élément de bande étant composé d'un ou de plusieurs fils d'acier de la tringle (2) revêtus d'un matériau de résine (3) ; et **caractérisé par**
une étape de liaison consistant à relier la pluralité d'un ou de plusieurs types de corps annulaires les uns aux autres dans une direction axiale du corps annulaire.

2. Procédé de production d'une tringle selon la revendication 1, dans lequel
l'étape de formage est effectuée avant l'étape de liaison.

3. Procédé de production d'une tringle selon la revendication 1, dans lequel
l'étape de formage et l'étape de liaison sont effectuées simultanément.

4. Procédé de production d'une tringle selon l'une quelconque des revendications 1 à 3, dans lequel
lors de l'étape de liaison,
une interface entre la pluralité d'un ou de plusieurs types de corps annulaires à être reliés les uns aux autres dans la direction axiale du corps annulaire est soudée ou collée.

5. Procédé de production d'une tringle selon l'une quelconque des revendications 1 à 4, dans lequel
le corps annulaire est formé, dans lequel l'élément de bande est enroulé de sorte à être empilé par soudage ou collage.

6. Procédé de production d'une tringle selon l'une quelconque des revendications 1 à 5, dans lequel
l'élément de bande est composé des deux ou trois fils d'acier de la tringle revêtus du matériau de résine.

7. Procédé de production d'une tringle selon l'une quelconque des revendications 1 à 6, dans lequel
l'élément de bande a une forme en polygone dans une coupe transversale axiale du corps annulaire.

8. Tringle (5), comprenant :
un ou plusieurs types d'une pluralité de corps annulaires, chacun des corps annulaires étant formé en enroulant un élément de bande (4) de deux tours ou plus, l'élément de bande étant composé d'un ou de plusieurs fils d'acier de la tringle (2) revêtus d'un matériau de résine (3) ; **caractérisé en ce que**
ladite pluralité de corps annulaires sont reliés les uns aux autres dans une direction axiale du corps annulaire.

9. Tringle selon la revendication 8, dans laquelle
l'interface entre l'un ou les plusieurs types de la pluralité de corps annulaires est soudée ou collée, de sorte que l'un ou les plusieurs types de la pluralité de corps annulaires sont reliés les uns aux autres dans la direction axiale du corps annulaire.

10. Pneumatique, comprenant :
une paire de parties de talon (6) ; et
la tringle (5) selon la revendication 8 ou 9 dans la partie de talon.
